Europäisches Patentamt

(19) **European Patent Office**

Office européen des brevets

(11) Publication number: **0 105 411**
**A2**

## (12) EUROPEAN PATENT APPLICATION

(21) Application number: **83109395.0**

(22) Date of filing: **21.09.83**

(51) Int. Cl.³: **B 29 C 17/02**

(30) Priority: **30.09.82 GB 8228017**

(43) Date of publication of application:
**18.04.84 Bulletin 84/16**

(84) Designated Contracting States:
**AT BE CH DE FR GB IT LI LU NL SE**

(71) Applicant: **PERSTORP WARERITE LIMITED**
**Aycliffe Industrial Estate**
**Newton Aycliffe Co. Durham DL5 6EF(GB)**

(72) Inventor: **Crabtree, Michael Antony**
**Perstorp Warerite Ltd. Aycliffe Industrial Estate**
**Newton Aycliffe Co. Durham DL5 6EF(GB)**

(74) Representative: **Howden, Christopher Andrew et al,**
**FORRESTER & BOEHMERT Widenmayerstrasse 4/I**
**D-8000 München 22(DE)**

(54) Method of forming a laminated product and product produced by the method.

(57) A method is disclosed of forming a shaped panel comprising a thin flexible facing sheet 10 supported by and bonded to a rigid substrate structure, 12, 14 in which the facing sheet has relatively planar portions, and a curved portion 10c connecting said planar portions. In the method, the facing sheet 10, initially planar, is bonded to planar rigid panels 12 and 14, or to a single panel subsequently divided into separate panels 12 and 14, the panels 12 and 14 being spaced apart along opposing edges to define a longitudinally extending gap 24 therebetween. The assembly is then bent at the portion of the facing sheet spanning the panels 12 and 14 and held in the desired position while synthetic resin is introduced into the gap 24 in a liquid or flowable condition and allowed to set to hold the assembly in the desired position and at the same time provide a strong joint between the substrate panels 12 and 14 and provide continuous support for the curved portion 10c of the facing sheet. The method of the invention avoids the accurate shaping of filling or coving members used in some known methods, and avoids the inherent mechanical weaknesses in the product of these and other known methods and is simple and inexpensive to put into effect.

Fig. 1b

Croydon Printing Company Ltd.

0105411

## Description of Invention

"Method of forming a laminated product and product produced by the method"

THIS INVENTION relates to a method of forming a laminated product, more particularly a product comprising a relatively thin sheet of flexible material supported by, and bonded to, a relatively thick rigid substrate structure. The invention also relates to such a product produced by the method of the invention. The relatively thin sheet is itself commonly referred to as a laminate, and may itself be of laminated construction, but to avoid confusion is herein referred to as a 'facing sheet'.

The use, in such areas as the interior furnishing of buildings, (for example, in shop fitting, and kitchen furnishing) of panels comprising relatively rigid substrates to which are bonded relatively thin facing sheets having a decorative and protective function is already widespread. The manufacture of such panels in a strictly planar form can be readily effected automatically on a mass-production basis. However, there is also a demand for comparable panels having surface regions thereof which are curved, for example to present two substantially mutually perpendicular planar portions connected by a curved portion, for example to form an internal corner at a junction between panelled walls of a room or to afford the top and front of a counter together with an external corner defining the front edge of the counter. There are various known ways of producing such shaped panels, but these are generally expensive to carry out, or produce unsatisfactory results.

Thus, it is known to produce such a shaped panel, having the facing sheet on the interior of the bend, by bonding the facing sheet, in a flat condition, to two substrate panels spaced apart along opposing parallel edges thereof to define an elongate gap therebetween, to thereafter bend the region of the. facing sheet spanning the substrate panels by moving the substrate panels angularly until they lie in mutually perpendicular planes, thus opening out said elongate gap transversely, and inserting into the opened-out gap a filler member which is secured to the substrate panels in the region of the bend, to hold the substrate panels in the desired relative positions. The opposing edges of the substrate panels may be so formed that, when the substrate panels are moved into their desired relative positions, a filler member may be utilised which is of substantially rectangular cross-section, with mutually perpendicular faces thereof engaging the edge faces of the substrate panels and the curved portion of the facing sheet being either unsupported or receiving support over only a limited area from a corner portion of the substantially rectangular section filler member. The last noted method may be carried out relatively easily and quickly but has the disadvantages of being inaccurate and providing a structure which is vulnerable to damage, especially when thin facing sheets are used.

Alternatively, a filler member may be used which is so formed as to provide support for the curved portion of the facing sheet over substantially the whole of its area. However, such a method requires, in order to afford a satisfactory result, accurate forming of the respective edges of the substrate panels and of the filler member, in order to reduce or eliminate voids, and is therefore expensive.

It is an object of the present invention to provide a method of forming a product of the character referred to which is simple and inexpensive to carry out and yields a strong and otherwise satisfactory product.

According to one aspect of the present invention there is provided a method of forming a product comprising a relatively thin facing sheet of flexible material supported by and bonded to a relatively thick rigid substrate structure, the said facing sheet having portions lying in respective non-parallel planes and connected by a respective curved portion of said facing sheet, the method comprising forming an intermediate product in which said facing sheet, in a substantially planar state, is bonded to respective planar surfaces of at least two rigid substrate members separated, in a direction parallel with the plane of the facing sheet, by a gap defined between opposing edges of said substrate members and spanned by said facing sheet, moving said rigid substrate members relatively to one another to place the respective portions of said facing sheet bonded to said substrate members in the respective desired non-parallel planes whilst curving (as herein defined) the facing sheet spanning said gap, then introducing into the gap defined between said rigid substrate members a synthetic resin in a liquid or flowable condition and causing or allowing said resin to harden to maintain said substrate members and said facing sheet in the desired relative positions.

The term 'curving' as used in the preceding paragraph, in the following description and in the claims, is intended to include bending whilst cold and forming to a curve under the action of heat.

The invention also comprehends within its scope a product formed by the method.

In order that the invention may more readily be understood embodiments of the invention are hereafter described by way of example and with reference to the accompanying drawings, in which:-

Figures Ia and Ib are cross-sectional views illustrating the formation of a shaped panel incorporating a portion having a convexly curved outer surface;

Figures 2a, 2b and 2c are cross-sectional views illustrating the formation of a shaped panel having two mutually perpendicular parts connected by a portion providing a concavely curved outwardly facing surface;

Figures 3a and 3b are cross-sectional views illustrating the manufacture of a shaped panel having two mutually perpendicular planar portions connected by a portion affording a convexly curved outer surface; and

Figures 4a and 4b are cross-sectional views illustrating the manufacture of another form of shaped panel of the same general type as Figure 3 having two mutually perpendicular planar portions connected by a portion affording a convexly curved outer surface, and

Figures 5a and 5b are cross-sectional views illustrating a variant of the mannufacturing method illustrated in Figures 2a to 2c.

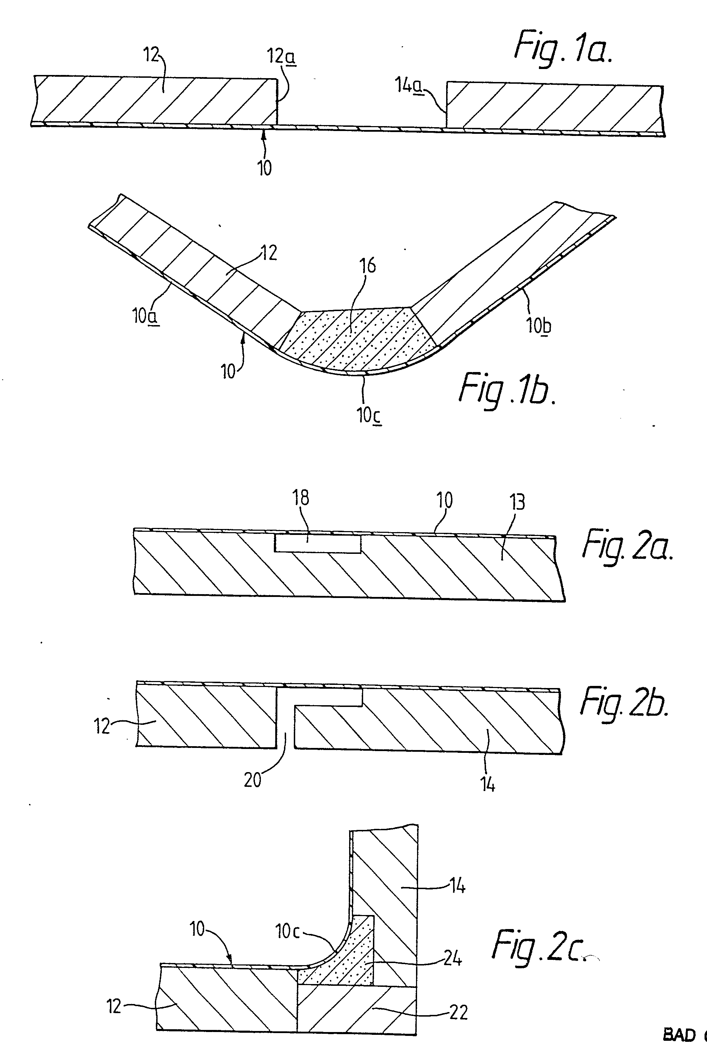

Figure 1b depicts a shaped panel having the cross-sectional form shown, and providing an outwardly presented facing sheet 10, for example of relatively thin, flexible, plastics material, and having two planar portions 10a and 10b connected by a convexly curved portion 10c, with the facing sheet being supported by a relatively rigid substrate structure 12, 14, 16. This panel is, in accordance with this invention, formed as follows.

The sheet 10, in a flat planar condition, is bonded to two rigid substrate panels, for example of chip-board, in a press, with the opposing end faces 12a and 14a of the panels 12 and 14 respectively being spaced apart, in a direction parallel with the plane of the sheet 10, to define a gap, in the form of an elongate channel therebetween, all as shown in Figure 1a. The edge faces 12a and 14a will normally extend parallel with one another in the direction perpendicular to the plane of the drawings as well as perpendicular to the plane of sheet 10. After removal from the press, the product is brought to the general shape shown in Fig. 1b, in which the panels 12 and 14 are inclined relative to each other and the unsupported portion 10c of the sheet spanning the gap, lying on the outside of the angle between the panels 12 and 14, is curved as shown, about an axis parallel with the longitudinal direction of said gap and with the planes of the panels 12 and 14. In bringing the product to the shape shown in Figure 1b, the sheet 10, in the region between the panels 12 and 14 is brought to the curved configuration shown by cold bending or by forming under the action of heat. The assembly is held in this position by a suitable jig, with the channel of which the side walls are defined by the faces 12a and 14a and of which the bottom is defined by the portion 10c, being open upwardly. The ends of the channel are closed by some appropriate means, for example by end plates engaging, effectively sealingly, the edges of the panels 12 and 14 and of the sheet 10c at the respective longitudinal ends of the gap and an initially liquid synthetic resin is introduced into the channel and allowed to set to provide a body 16 of cured resin in intimate contact with, and bonded to, the end faces 12a and 14a and the concave, upwardly presented face of the sheet portion 10c, to afford a strong accurate joint.

In the panel shown in finished form in Figure 2c, which again comprises two planar substrate panels 12 and 14 having bonded thereto a thin flexible facing sheet 10, with the portion of the facing sheet spanning the two panels 12 and 14 being disposed in a curve, the panels 12 and 14, and thus the portions of the sheet 10 bonded thereto, are mutually perpendicular with the sheet 10 lying on the inner side of the angle between the panels 12 and 14. Referring to Figure 2a, in a first step in forming such a panel, the sheet 10 is bonded, in a press, to a unitary rigid panel 13, for example of chipboard, the panel 13 being previously formed, on its face to which the sheet 10 is bonded, with a rectangular-section channel 18, over which the sheet 10 remains unconnected with the panel 13. As shown in Figure 2b, after removal of the assembly from the press, a slot 20 is cut into the panel 13, extending from the underside of panel 13, i.e. the surface thereof remote from the sheet 10, to the channel 18, so that the panel 13 is cut into two sub-panels 12 and 14, lying on opposite sides of the gap defined by the slot 20 and the channel 18. The panels 12 and 14 are then moved to positions at right angles to one another so that the sheet 10 extends in an arc of 90° on the inside of the corner between the panels 12 and 14. A filling member 22 of timber or chipboard or the like, and of rectangular cross-section, is then fitted, as shown in Figure 2c, on the outer side of the corner, so that respective faces of the member 22 abut the end face of panel 12 and the end face of panel 14, whilst the other longitudinal faces of the filler member 22 lie flush with the rear faces of the panels 12 and 14 respectively. It will be appreciated that with this arrangement there is defined between the curved sheet portion 10c, the exposed portion of the end face of panel 12, the filler member 22 and the faces of the panel 14 which afforded the bottom wall and one side wall of the channel 18, a longitudinal passage, of substantially uniform cross-section, which is closed except at its longitudinal ends. The space 24 is then filled with an initially liquid synthetic resin which is allowed to harden as before forming an extremely strong joint in which the facing sheet 10c is completely supported.

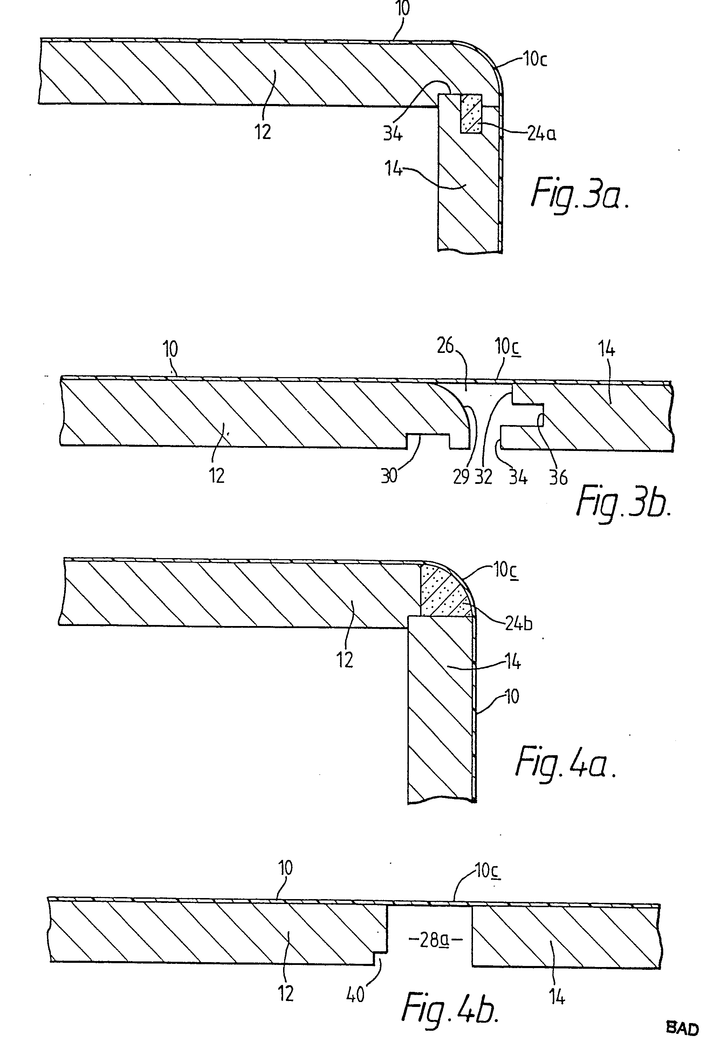

Figure 3a shows a shaped panel which again comprises mutually perpendicular planar substrate panels 12 and 14, for example chipboard carried on one side by a relatively thin flexible facing sheet 10 extending around a curved corner between the panels 12 and 14, but in this case the facing sheet 10 lies on the outside of the corner between the panels 12 and 14 so that the outwardly presented curved surface of the sheet 10 is convex. This shaped panel is formed by bonding the sheet 10, in a planar condition, in a press, to co-planar surfaces of respective panels 12 and 14 which again are relatively thick and rigid, è.g. being of chipboard, the panels 12 and 14 being separated by a gap or channel 26 defined between ajoining, spaced-apart edges of the panel 12 and 14. Referring to Figure 3b which shows the product, still in the planar condition in which it leaves the press, the upper corner i.e. the corner nearest the sheet 10, of the edge of panel 12 adjacent panel 14 is chamfered or radiussed as shown at 29, whilst, adjacent that edge of panel 12, the latter is formed in its underside with a rectangular-section groove 30 extending parallel with the longitudinal extent of the channel 26. The panel 14 has a rectangular-section rebate 36 formed in its edge which faces towards panel 12, with rebate 36 being open towards panel 12. Above the rebate 36, the panel 14 has an edge portion 32, nearer the panel 12, and below the rebate 36 the panel 14 has an edge portion 34, the edge portion 32 being set back, from the panel 12, relative to the edge portion 34. After the bonded assembly shown in Figure 3b is removed from the press, the panels 12 and 14 are moved relative to one another in such a way as to extend the portion 10c of the sheet 10 extending between the panels 12 and 14 in a curve over the curved surface 29, to bring the edge portion 32 into abutment with the underside of the panel 12 adjacent the edge of panel 12 and to bring the portion of the panel 14 affording the end face 34 into the rebate 30 so that the end face 34 engages the bottom of the rebate 30 with the underside of the panel 14 engaging the side of the rebate 30 furthest from the edge of panel 12, whereby a rectangular-section, longitudinally extending gap 24a is defined by the rebate 36 and a cooperating portion of the rebate 30. This gap is once again open only at its longitudinal ends and, as in the embodiment of Figures 2a to 2c, is subsequently filled with an initially liquid synthetic resin, which may also extend across the remainder of the opposing faces of the panels 12 and 14, so that once the resin has hardened, a strong joint is again produced requiring no further strengthening, e.g. by fillets on the inside of the corner.

. The shaped panel of Figure 4a does not differ from that of Figure 3a in appearance (except in section as shown in Figure 4a) but is substantially easier to form. Thus, in forming this panel, two planar, relatively thick substrate panels 12 and 14, are again bonded to a relatively thin flexible facing sheet 10, in a flat condition, in a press, adjacent edges of the panels 12 and 14 being again spaced apart to define, between the panels 12 and 14, a gap 28a which is spanned by the sheet 10. The edge face of panel 14 facing panel 12 is planar and perpendicular with the major face of the substrate panel to which the sheet 10 is bonded, whilst the form of the opposing edge of the panel 12 differs from that of the panel 14 only in that a rectangular rebate 40 is formed between the lower face, and said edge face, of panel 12. In shaping the panel, the panels 12 and 14 are again moved angularly relatively to one another as shown in Figure 4a, so that the sheet 10 extends around the outside of the bend, but in this case the curved portion 10c of the sheet 10 is initially unsupported internally, whilst the free corner edge of the end face of panel 14 engages in the rebate 40 to provide an effective seal between the panels 12 and 14 whereby the longitudinally extending gap 24b defined between the edge faces of the panels 12 and 14 and the sheet 10 is open only at the longitudinal end of said gap. The gap 24b is subsequently, as in the preceding embodiments, filled with initially liquid resin, which, after hardening, provides a strong joint between the panels 12 and 14 and completely supports the inner face of the curved portion 10c of the sheet 10.

A shaped panel of a form similar to that of Figure 2c may be formed by a variant method in which a filler piece such as piece 22 is not required.

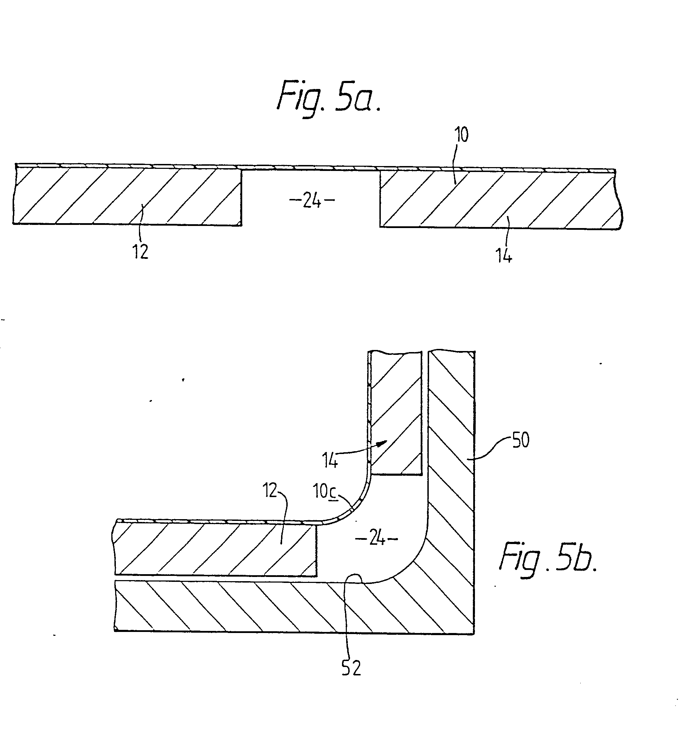

In this variant method use is made of a mould 50, (Figure 5b) which provides a mould surface 52 of a profile similar to that of the outer surface of the sheet 10 in Figure 2c, i.e. affording to planar portions connected by a concavely curved portion.

In carrying out this method, two planar, relatively thick substrate panels 12 and 14 are again bonded to a relatively thin flexible facing sheet 10, in a flat condition, adjacent edges of the panels 12 and 14 being again spaced apart to define, as shown in Figure 5a, a gap 28 spanned by the sheet 10, the opposing edge faces of panels 12 and 14 being planar, parallel with one another, and perpendicular to the major faces of the substrate panels. In shaping the panel the panels 12 and 14 are again moved angularly relatively to one another, and the product is fitted in the mould 50 so that the undersides of the panels 12 and 14 lie against the planar portions of the mould surface 52, with the portion 10c of the sheet 10 spanning the panels 12 and 14 extended in a curve between the panels 12 and 14.

The liquid synthetic resin is then injected or poured into the cavity defined between the sheet portion 10c and the mould surface in the region between the adjacent edge faces of the panels 12 and 14 and allowed to set. When the resin has set, the now rigid construction is removed from the mould which is then available for re-use.

The mould 50 may be manufactured from any suitable rigid material and provided with a smooth impermeable mould surface 52, which may either be provided by the material of the body of the mould or by a smooth sheet applied to the surface of the last-mentioned material. Depending on the nature of the material providing the mould surface 52 it may or may not be necessary to apply a mould release agent or lubricant to the mould surface.

It will be appreciated that, for the manufacture of the shaped panels of Figures 2c, 3a, 4a and 5b, as for that of Figure 1b, it is necessary to close the ends of the spaces 24, 24a, 24b to retain the resin prior to hardening and, as in the embodiment of Figures 1a and 1b this is preferably done by means of metal plates or blocks engaged with the ends of the substrate panels and facing sheet. To this end, after completion of the pressing operation by which the facing sheet is bonded to the substrate sheets, the ends of the panel are dressed square to the longitudinal edges and to the planes of the major surfaces of panels 12 and 14. This simplifies the sealing of the ends of the gap into which the resin is to be introduced.

Prior to the introduction of the resin, which is preferably a polyurethane resin system, but the assembly comprising the facing sheet and substrate panels bonded thereto is fitted into a jig designed to hold the assembly in the desired shape and to seal the space intended to receive the resin, whilst the resin is introduced.

When the resin is to be introduced by injection, the metal blocks provided to seal the resin space at either end are preferably heated using cartridge-type heating elements, to a temperature in the range of 40°C to 100°C. A port is formed through one of the heated blocks for the supply of resin to the resin space, this port preferably tapering in diameter from the face of the block which engages the panel assembly, to ease extraction of the plug of resin left in the port when the resin introduced into the joint has cured. In injection of the resin, the injection nozzle of an appropriate resin injection apparatus is placed into engagement with the port and the components of the resin, duly mixed, are injected into the joint cavity.

The preferred resin cures by a catalysed or exothermic reaction, curing of the resin being assisted by contact with the heated end plates. After removal of the end plates from the panel and the dressing-off of the aforementioned plug, the panel is ready for further treatment.

A very similar procedure may be adopted in a case where the resin is simply cast, i.e. poured under gravity into the joint cavity. Once again, by using heated end blocks at the ends of the joints, the resin cure rate can be accelerated, the use of such end blocks also ensuring that the ends of the joint remain clean and flush with the edges of the panels and facing sheet, (although once again it is necessary to dress off the plug formed in the ported end plates)

The synthetic resin used is preferably one which sets from an initially liquid or flowable condition to a hard condition by a chemical reaction, although it is conceivable that in some applications a thermoplastic resin could be utilised.

The preferred synthetic resin is a polyurethane resin, although phenolic or polyester resins could be used.

If desired a foamed resin system may be used.

It will be appreciated, therefore, that it is possible, utilizing the present invention, to produce shaped panels rapidly, without highly skilled personnel or expensive machining operations, and nevertheless to obtain a strong durable product and to secure a lower rate of reject in production than hitherto. Furthermore the invention makes it possible to produce such panels with more complicated and varied shapes than have formerly been possible.

The strength of the joints afforded by the resin between the substrate panels and the facing sheet is such that it is possible to use a lower grade of substrate panel than has been possible up till now without weakening the product in the region of the bends, and this factor also leads to a cost saving.

Whilst, for the sake of simplicity, the above description has been confined to the formation of a single curved junction between two planar, relatively inclined portions of a product faced by the facing sheet, it will be appreciated that by providing an appropriate number of appropriately shaped and spaced apart substrate panels and utilizing appropriate jigs or the like to hold the panel assembly in the desired position to afford respective resin gaps at each of the curved portions of the product, with each said curved portion being formed by one or other of the methods described with reference to the drawings, it is possible to produce products having a plurality of curved regions between respective planar portions.  Thus articles such as column casings, radiator casings, sanitary units, kitchen and commercial counter or bar tops, and the like may be formed.  Products produced by the methods described with reference to the drawings have the impact resistance necessary for such articles.

## CLAIMS

1.　A method of forming a product comprising a relatively thin facing sheet of flexible material supported by and bonded to a relatively thick rigid substrate structure, the said facing sheet having portions lying in respective non-parallel planes and connected by a respective curved portion of said facing sheet, the method comprising forming an intermediate product in which said facing sheet, in a substantially planar, state is bonded to respective planar surfaces of at least two rigid substrate members separated, in a direction parallel with the plane of the facing sheet, by a gap defined between opposing edges of said substrate members and spanned by said facing sheet, moving said rigid substrate members relatively to one another to place the respective portions of said facing sheet bonded to said substrate members in the respective desired non-parallel planes whilst curving (as herein defined) the facing sheet spanning said gap, then introducing into the gap defined between said rigid substrate members a synthetic resin in a liquid or flowable condition and causing or allowing said resin to harden to maintain said substrate members and said facing sheet in the desired relative positions.

2.　A method according to claim 1 wherein the gap into which said resin is introduced is partly defined by the curved surface of said facing sheet in the region thereof spanning said slot, and is partly defined by at least portions of said opposing edges of said substrate members.

3.　A method according to claim 1 or claim 2 wherein, prior to introduction of the resin, the facing sheet and substrate members are supported so that said gap has the form of an upwardly open longitudinally extended horizontal channel, the bottom of which channel is defined by the curved portion of the facing sheet and the sides of which are afforded by the opposing edges of the substrate members, said channel being closed at its ends by closure members and the resin being cast into said channel.

4.　A method according to claim 1 or claim 2 wherein said edges of the substrate members are so formed, and the substrate members so arranged prior to the introduction of said resin, that said gap is closed by portions of

-12- 0105411

said substrate members, except at the ends of said slot.

5. A method according to claim 1 or claim 2 wherein a filler member is fitted in the region of said gap in such a way that said gap is partially bounded by said filler member, and the arrangement is such that prior to the introduction of said resin, the said gap is closed except at the ends of said slot.

6. A method according to claim 5 or claim 6 wherein prior to introduction of said resin into said gap, the ends of said gap are closed by respective end plates engaging in sealing engagement a respective set of co-planar end faces of the substrate members, and, if present, said filler member, and a respective co-planar edge of the facing sheet, and wherein said resin is introduced into said gap via a port in one of said end plates.

7. A method according to any preceding claim wherein said resin is one which sets from an initially liquid or flowable condition to a hard condition by a chemical reaction.

8. A method according to claim 7 wherein said end plates are heated to accelerate hardening of said resin.

9. A product produced by the method of any one of claims 1 to 8.

Fig. 1a.

Fig .1b.

Fig. 2a.

Fig. 2b.

Fig.2c.

BAD ORIGINAL

0105411

10

10c

12

34

24a

14

*Fig.3a.*

10

26

10c

14

12

30

29 32 34 36

*Fig.3b.*

10c

12

24b

14

10

*Fig.4a.*

10

10c

12

40

−28a−

14

*Fig.4b.*

BAD ORIGINAL

0105411

## Fig. 5a.

BAD ORIGINAL

## Fig. 5b.